# EUROPEAN PATENT SPECIFICATION

(11) **EP 1 160 777 B1**
(45) Date of publication and mention of the grant of the patent: **30.11.2005**
(21) Application number: 01300315.7
(22) Date of filing: 15.01.2001
(51) Int. Cl.: G11B 7/125, G11B 7/00

(54) **Device for recording optical disc and method therefor**
Gerät zur Aufzeichnung auf eine optische Platte und Verfahren dafür
Appareil d'enregistrement sur un disque optique et procédé associé

(30) Priority: 15.05.2000 JP 2000142200
(43) Date of publication of application: 05.12.2001
(73) Proprietor: SAMSUNG ELECTRONICS CO., LTD., Suwon-City, Kyungki-do (KR)
(72) Inventor: Yoshida, Tohru, Kami-gun, Miyagi Pref. (JP)
(74) Representative: Chugg, David John

(56) References cited:
- EP-A- 0 414 557
- US-A- 5 214 629
- PATENT ABSTRACTS OF JAPAN vol. 1995, no. 04, 31 May 1995 (1995-05-31) -& JP 07 006441 A (RICOH CO LTD), 10 January 1995 (1995-01-10)

## Description

The present invention relates to a device for recording an optical disc, and more particularly to a device for recording an optical disc and a method thereof, in which an optical power irradiated to record necessary information may be controlled.

An optical disc using a dye-polymer recording material such as a CD-Recordable (CD-R) and the like operates to record the necessary information with a constant linear velocity (CLV). The optical disc provides an advantage in that the recording quality is maintained constant, as a time for recording by irradiation is constant, even though the recording process may be performed in any position of the optical disc.

However, there is drawback in that the circuit for rotating the optical disc (or the spindle motor itself) may malfunction and the power consumption increases due to a rapid increase or decrease in rate of rotation, such a variation may occur up to a maximum factor of 2.5 times according to a rotational position in a radius direction of the optical disc.

Further, another disadvantage concerns the lack of capability of recording at high speed.

One possibility for solving the problems of the prior art is to control the rate of rotation with a constant angular velocity (CAV).

However, there is still a drawback in that recording quality is not maintained by varying the irradiating time depending on the recording position, since the constant linear velocity differs according to the radial recording position on the optical disc.

EP-A-0414557 discloses an optical disk recording/reproducing device for recording and/or reproducing information on and/or from an optical disk while rotatively driving the optical disk in angular constant velocity. Pre-recorded information is cyclicly formed along a track on the disk so as to provide rotation control by constant linear velocity. A recording light power control circuit is provided for changing recording light power of a laser beam applied from an optical head onto a disk, according to a variation of a frequency for recording. This document forms the pre-characterising portion of the independent claims 1 and 2 appended hereto.

US-A-5214629 discloses an optical disk system comprising means for generating a speed control signal for a light spot. Document JP-A-07006441 discloses a magnetooptical recording method of a mark modulation system capable of precisely marking regardless of a difference of linear velocities in inner and outer peripheries on a medium.

It is an aim of embodiments of the present invention to provide a device for recording an optical disc and a method in which recording quality can be maintained constant when information is recorded on an optical disc which rotates with a constant rate of rotation.

According to a first aspect of the invention, there is provided a device for recording an optical disc which is constantly rotating at a given rate of rotation for recording information, the device comprising: a linear velocity detector for detecting a linear velocity that is a relative velocity of a light spot relative to a surface of the optical disc on which the spot is irradiated to record the information, said velocity being measured in a circumferentially tangential direction of the optical disc; and an optical power controller for controlling the optical power irradiated to record information on the surface of the optical disc based on the linear velocity detected by the linear velocity detector. The linear velocity detector comprises: a disc clock detector for detecting a constant disc clock amongst the tracks formed on the surface of the optical disc; and a frequency to voltage converter for converting the frequency of the disc clock signal outputted from the disc clock detector into a voltage according to the frequency. The linear velocity detector further comprises a square root calculator for calculating a square root of the voltage converted from the frequency to voltage converter. The optical power controller controls the optical power irradiated to record the information on the surface of the optical disc based on the square root calculated by the square root calculator.

According to a second aspect of the invention, there is provided a method for recording an optical disc which is constantly rotating at a given rate of rotation for recording information, the method comprising the steps of: detecting a linear velocity that is a relative velocity of a light spot relative to a surface of the optical disc on which the spot is irradiated to record the information, said velocity being measured in a circumferentially tangential direction of the optical disc; and controlling the optical power irradiated to record the information on the surface of the optical disc based on the linear velocity detected from the detecting step. The detecting step further comprises: detecting a constant disc clock amongst the tracks formed on the surface of the optical disc; and converting the frequency of the disc clock signal into a voltage according to the frequency. The detecting step further comprises calculating a square root of the voltage converted according to the frequency. The controlling step further comprises controlling the optical power irradiated to record the information on the surface of the optical disc based on the square root.

For a better understanding of the invention, and to show how embodiments of the same may be carried into effect, reference will now be made, by way of example, to the accompanying diagrammatic drawing in which:

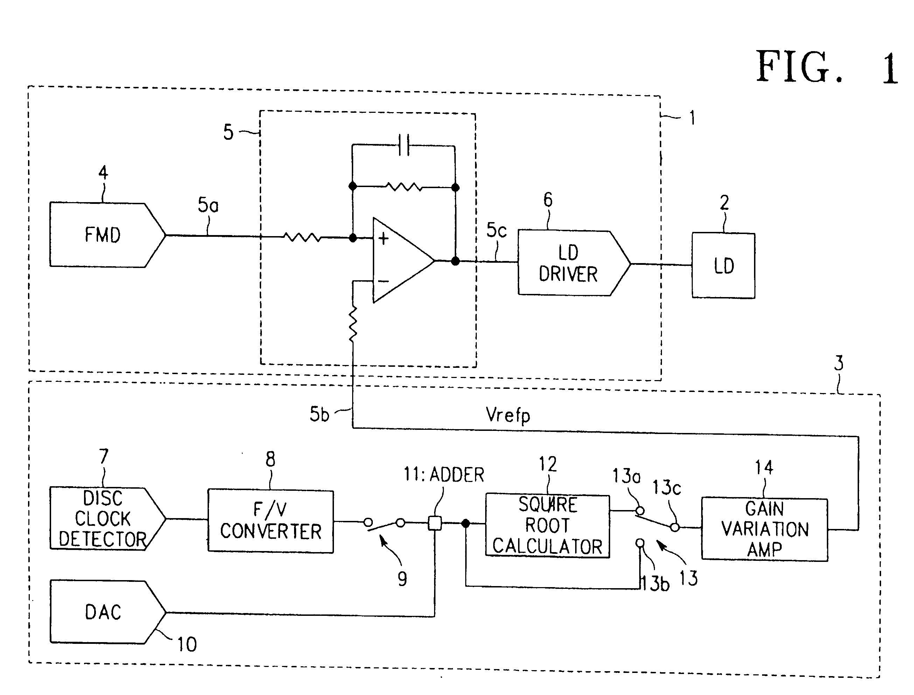

Figure 1 is a block diagram illustrating a part of a circuit installed on a recording device of recording an optical disc according to a preferred embodiment of the present invention.

A preferred embodiment of the present invention will now be described with reference to the accompanying drawing. The matters defined in the description such as a detailed construction and elements of a circuit are not to be construed as limiting, but are provided to assist in a comprehensive understanding of the invention.

Now, the construction of a device for recording optical discs in accordance with an embodiment of the present invention will be described hereinafter with reference to Figure 1.

An auto power control (APC) circuit 1 is shown which constantly maintains a laser optical power to record or write information on the optical disc regardless of temperature variation and the like within the recording device.

Numeral 2 represents a laser diode, driven by a driving current provided from the APC circuit 1 to generate a laser beam for directing the recording light beam for recording on the optical disc. Desired information is thereby recorded (written) onto the optical disc through the laser beam provided from the laser diode 2.

Numeral 3 represents a linear velocity detecting circuit that detects the linear velocity of the optical disc and provides a control reference voltage Vrefp to the APC circuit 1 depending on the detected linear velocity. Here, the linear velocity of the optical disc is defined as a relative velocity of a spot of the laser beam irradiated by the laser diode 2 in a tangential direction of a circumference of the optical disc corresponding so as to record the information on a surface of the rotating optical disc. That is to say, the linear velocity is the track scanning velocity of the laser beam spot.

The APC circuit 1 includes a front monitor diode 4 for detecting a power of the laser beam generated from the laser diode 2, an optical power control circuit 5 for outputting a control voltage according to the power of the laser beam detected by the front monitor diode 4, and a laser diode (LD) driver 6 for providing a driving current to the laser diode 2 according to the control voltage output from the optical power control circuit 5.

The front monitor diode 4 receives a part of the laser beam generated from the laser diode 2 and detects the power of the laser beam, and then outputs the detected voltage depending on the detected power.

The optical power control circuit 5 has an input terminal 5a, a control reference voltage input terminal 5b, and an output terminal 5c. The detected voltage output from the front monitor diode 4 is input to the input terminal 5a, the control reference voltage Vrefp provided from the linear velocity detecting circuit 3 is input to the control reference voltage input terminal 5b, and the control voltage is outputted through the output terminal 5c. The optical power control circuit 5 compares the control reference voltage Vrefp input to the control reference voltage input terminal 5b with the detected voltage input to the input terminal 5a. If the detected voltage is smaller than the control reference voltage Vrefp, the optical power control circuit 5 increases the control voltage which is output through the output terminal 5c, while if the detected voltage is larger than the control reference voltage Vrefp, the optical power control circuit 5 decreases the control voltage. Therefore, the power of the laser beam generated from the laser diode 2 is maintained substantially equal to the control reference voltage Vrefp regardless of temperature variation and the like.

The LD driver 6 receives the control voltage outputted from the output terminal 5c of the optical power control circuit 5, and provides the driving current depending on the inputted control voltage to the laser diode 2.

The linear velocity detecting circuit 3 includes a disc clock detector 7 for detecting the disc clock signal from the optical disc, a frequency to voltage (F/V) converter 8 for converting a frequency of the disc clock signal into a voltage, a first switch 9 for selectively switching the output of the F/V converter 8 to an adder 11 which will be described hereinafter, a digital to analog converter (DAC) 10 for converting an analog signal into a digital signal and using depending on kinds of the optical disc, the adder 11 for adding the output of the F/V converter 8 and the output of the DAC 10, a square root calculator 12 for calculating a square root for the output of the adder 11, a second switch 13 for selectively bypassing the output of the square root calculator 12, and a gain variation amplifier 14 for varying a gain of the output signal of the second switch 13.

The disc clock detector 7 detects the disc clock signal recorded along with tracks of the optical disc, and outputs the disc clock signal having the frequency in accordance with the linear velocity. The disc clock is generally formed along with the tracks of the optical disc in a fabricating process of the optical disc. The disc clock signal is used as a reference determining a position where the information is recorded or written, since the disc clock signal was previously formed on the surface of the optical disc before the step of recording or writing the information on the optical disc. The disc clock signal always has a constant frequency corresponding to a unit length of the tracks.

The disc clock is the signal obtained by scanning the disc signal recorded along with the tracks of the optical disc by the disc clock detector 7. Accordingly, the disc clock detector 7 can obtain the disc clock signal having the constant frequency due to scan the tracks of the optical disc with the constant velocity, as the rotation of the optical disc is controlled by the constant linear velocity, i.e., the relative velocity between the optical disc and the disc clock detector 7 in the tangential direction of the circumference of the optical disc. The frequency of the disc clock signal is also varied since the velocity of scanning the tracks of the optical disc by the disc clock detector 7 is varied according to the position in a radius direction of the scanning tracks, if the rotation of the optical disc is controlled to be maintained with constant the number of the rotation.

An example of the disc clock is used as a wobble in the present invention. The wobble is a curve of S-shape for grooves of the tracks, the number of meanderings per unit length of track is a constant regardless the position of the tracks. The disc clock detector 7 outputs the wobble signal when the wobble is input. The frequency of the wobble signal is a value proportional to the velocity of scanning of the wobble by the disc clock detector 7, i.e., the linear velocity.

The F/V converter 8 converts and outputs the frequency of the disc clock signal outputted from the disc clock detector 7 into a voltage proportional to the frequency.

The first switch 9 selectively switches the voltage outputted from the F/V converter 8 to the adder 11. If the first switch 9 is closed, the voltage of the F/V converter 8 is inputted to the adder 11, and then the frequency of the disc clock signal reflects the power of the laser beam. That is, the power of the laser beam scanning onto the optical disc for recording or writing the information varies along with the linear velocity. While, if the first switch 9 is opened, the voltage of the F/V converter 8 is not input to the adder 11, and then the frequency of the disc clock signal is not reflected the power of the laser beam.

The reason of equipping the first switch 9 is to prepare the case that the most optimized power of the laser beam in recording, is not depended on the linear velocity according to recording material for the optical disc.

For example, there is a case that the most optimized power of the laser beam in recording, is not dependant on the linear velocity in the optical disc using a phase variation recording material. At this stage, the frequency of the disc clock signal is not reflected on the power of the laser beam by opening the first switch 9.

While, the frequency of the disc clock signal is reflected on the power of the laser beam by closing the first switch 9 in the optical disc using the coloring system recording material, since the power of the laser beam is dependant on the linear velocity.

The DAC 10 is used for the optical disc used the phase variation recording material and for a case of performing the CLV record. That is, the control reference voltage Vrefp is determined by varying the output voltage of the DAC 10 in the above case. But, the DAC 10 outputs a constant voltage in other cases.

The adder 11 adds the output of the F/V converter 8 and the output of the DAC 10, and outputs the added result. But, the adder 11 outputs the output of the DAC 10 as an added result, since the output of the F/V converter 8 is not input to the adder 11 if the first switch 9 is opened.

The square root calculator 12 calculates the square root of the added result outputted from the adder 11 and outputs the calculated results. The reason for obtaining the square root is to improve the recording quality, as the power of the laser beam becomes proportionate to the value of the square root of the linear velocity in the case where the recording material is a colour system material for instance.

The second switch 13 selectively outputs the square root of the added result or the adder 11 output. The detailed operation of the second switch 13 will be described hereinafter. The second switch 13 has three terminals 13a, 3b, and 13c. The calculated result output from the square root calculator 12 is input to the first terminal 13a, the added result output from the adder 11 is input to the second terminal 13b.

So, when the third terminal 13c of the second switch 13 as a reference point switches to the third terminal 13a, the calculated result of the square root calculator 12 is transferred to a next stage and the square root of the added result outputted from the adder 11 is selected by switching operation. While, the first and third terminals 13b and 13c of the second switch 13 are connected, the output of the square root calculator 12 is bypassed to the next stage and the square root of the added result outputted from the adder 11 is not obtained.

The function of the second switch 13 is to allow for either providing or not providing a square root of the velocity according to the particular recording material used in the optical disc. For example, as described above, there is a case where the most optimized power of the laser beam in recording, is not dependant on the linear velocity in the optical disc using the phase variation recording material. At this stage, the frequency of the disc clock signal is not reflected on the power of the laser beam by opening the first switch 9, and the output of the square root calculator 12 is bypassed by switching the third terminal 13c of the second switch 13 to the second terminal 13b.

While, in the optical disc using the coloring system recording material, the frequency of the disc clock signal is reflected in the power of the laser beam by closing the first switch 9, and the square root of the calculated result outputted from the adder 11 is calculated by using the square root calculator 12 and switching the third terminal 13c of the second switch 13 to the second terminal 13a, since the power of the laser beam is proportional to the square root of the linear velocity.

Therefore, a device for recording optical discs can record on each kind of disc whose relation of the power for recording and the linear velocity differs, by virtue of providing the first and second switches 9 and 13.

The gain variation amplifier 14 receives the calculated result output from the square root calculator 12 or the added result output from the adder 11 through the third terminal 13c of the second switch 13, and amplifies the input signal with a predetermined gain and outputs the amplified result as the control reference voltage Vrefp. The most optimized gain is obtained by performing a plurality of testing records as varying the gain under a case that the gain is variable and the testing record, named as a optimum power control (OPC), is performed on the optical disc. The most gain obtained in OPC is used on recording the information. The control reference voltage Vrefp outputted from the gain variation amplifier 14 is inputted to the input terminal 5b of the optical power control circuit 5, and becomes the reference value when the power of the laser beam is controlled.

According to the frequency of the disc clock signal, a circuit for varying the laser optical power can be easily added depending on the frequency of the disc clock signal without requiring large modifications to the APC circuit 1 in the related art, if the control reference voltage Vrefp of the optical power control circuit 5 which determines the power of the laser beam can be varied.

Now, the operation of the device of recording the optical disc according to a preferred embodiment of the present invention will be explained hereinafter.

First, it is considered that the optical disc rotates with the constant angular velocity (CAV) in the preferred embodiment of the present invention. Also, the optical disc is used the CD-R (CD-Recordable) using the coloring system recording material as an example to explain the preferred embodiment of the present invention. In the CD-R, a region in the inner part of the data area of the disc is generally used since the most suitable power of the laser beam differs in each disc, the most optimized power of the laser beam is determined by performing a test recording which is named as the OPC (Optimum Power Control).

In the OPC, a lot of the input operation for testing is performed by changing the control reference voltage Vrefp input to the input terminal 5b of the optical power control circuit 5, and the most optimized control reference voltage Vrefp is obtained from the test results.

The OPC is performed under condition that the first switch 9 is closed and the third terminal 13c of the second switch 13 is switched to the first terminal 13a. That is, the disc clock (wobble) of the disc OPC area is detected in the disc clock detector 7, and the frequency of the disc clock signal outputted from the disc clock detector 7 is converted into a voltage. The adder 11 adds the converted voltage and the output of the DAC 10, the square root calculator 12 calculates the square root of the added result. The calculated result output from the square root calculator 12 is input to the gain variation amplifier 14, thereby varying the gain of the gain variation amplifier 14. That is, the most optimized gain is determined by performing the test input and constantly varying the control reference voltage Vrefp in the number of rotations.

The recording is performed on the data area of the disc after determining the most optimized gain in the gain variation amplifier 14. At this stage, the disc clock detector 7 detects the disc clock in the part performing the recording of the data, and the F/V converter 8 converts the frequency of the disc clock signal depending on the linear velocity into the voltage. Then, the square root calculator 12 calculates the square root of the voltage output from the F/V converter 8, and the gain variation amplifier 14 receives the calculated result output from the square root calculator 12 and amplifies the received signal to obtain the most optimized gain and thereby output the control reference voltage Vrefp. And the optical power control circuit 5 controls the laser beam based on the control reference voltage Vrefp as an aiming value. Accordingly, the most optimized gain can be automatically obtained by varying the power of the laser beam depending on the linear velocity.

Also, in the case of CD-RW (CD-ReWritable) and the like using phase variation recording materials, the most optimized power of the laser beam in recording is not dependant on the linear velocity. At this stage, the frequency of the disc clock signal is not reflected in the control reference voltage Vrefp by opening the first switch 9, and the output of the square root calculator 12 is bypassed by switching the third terminal 13c of the second switch 13 to the second terminal 13b. The control reference voltage Vrefp is controlled by varying the output of the DAC 10 since the output of the DAC 10 is directly input to the gain variation amplifier 14.

In optical discs in which the most optimized power for recording is proportional to the linear velocity, the frequency of the disc clock signal is reflected in the control reference voltage Vrefp and not obtained the square root by closing the first switch 9, and the third terminal 13c of the second switch 13 is switched to the second terminal 13a.

As described above, since the device of recording the optical disc according to the preferred embodiment of the present invention constructs an exclusive hardware to control the power of laser beam, the variation of the power is continuously performed and the recording is also performed at the high velocity.

Further, a Micro Processor Unit (MPU) generally installed in the recording device can perform the above operation. For instance, the MPU monitors an address including the disc clock (wobble) and varies the power of the laser beam based on the monitored address. At this time, the MPU corresponds to a heavy load of the MPU by downing the frequency number for the changing the power of the laser beam, when the load of the MPU is more heaver as the power of the laser beam is converted into the digital signal.

According to the device of recording the optical disc according to the preferred embodiment of the present invention provides following effects.

The optical power for recording can be varied according to the linear velocity and the most optimized optical power can be obtained, and thereby maintaining the recording quality constant when the information is recorded on the optical disc rotating with a constant number of rotations, since the optical power controller controls the optical power irradiating for recording the information on the surface of the optical disc based on the linear velocity detected in the linear velocity detector.

Also, the optical power for recording can be varied and the most optimized optical power can be obtained according to the frequency of the disc clock signal, and thereby maintaining the recording quality constant, if the disc clock detector detects the disc clock and outputs the disc clock signal having the frequency by the linear velocity, the F/V converter converts the frequency of the disc clock signal into the voltage, the optical power controller controls the optical power irradiating for recording on the surface of the optical disc in accordance with the frequency of the disc clock signal based on the voltage converted in the F/V converter.

Further, the optical power for recording can be varied and the most optimized optical power can be obtained according to the square root of the frequency of the disc clock signal, and thereby maintaining the recording quality constant, if the square root calculator calculates the square root of the voltage converted in the F/V converter, and the optical power controller controls the optical power irradiating for recording on the surface of the optical disc based on the square root calculated in the square root calculator.

While the invention has been shown and described with reference to certain preferred embodiments thereof, it will be understood by those skilled in the art that various changes in form and details may be made therein without departing from the scope of the invention as defined by the appended claims.

## Claims

1. A device for recording an optical disc which is constantly rotating at a given rate of rotation for recording information, the device comprising:
a linear velocity detector (3) for detecting a linear velocity that is a relative velocity of a light spot relative to a surface of the optical disc on which the spot is irradiated to record the information, said velocity being measured in a circumferentially tangential direction of the optical disc; and
an optical power controller (1) for controlling the optical power irradiated to record information on the surface of the optical disc based on the linear velocity detected by the linear velocity detector;
the linear velocity detector (3) comprising:
a disc clock detector (7) for detecting a constant disc clock amongst the tracks formed on the surface of the optical disc; and
a frequency to voltage converter (8) for converting the frequency of the disc clock signal outputted from the disc clock detector (7) into a voltage according to the frequency;
**characterised in that**:
the linear velocity detector (3) comprises a square root calculator (12) for calculating a square root (12) of the voltage converted from the frequency to voltage converter (8); and
the optical power controller (1) controls the optical power irradiated to record the information on the surface of the optical disc based on the square root calculated by the square root calculator (12).

2. A method for recording an optical disc which is constantly rotating at a given rate of rotation for recording information, the method comprising the steps of:
detecting a linear velocity that is a relative velocity of a light spot relative to a surface of the optical disc on which the spot is irradiated to record the information, said velocity being measured in a circumferentially tangential direction of the optical disc; and
controlling the optical power irradiated to record the information on the surface of the optical disc based on the linear velocity detected from the detecting step;
the detecting step further comprising:
detecting a constant disc clock amongst the tracks formed on the surface of the optical disc; and
converting the frequency of the disc clock signal into a voltage according to the frequency;
**characterised by**:
the detecting step further comprising calculating a square root of the voltage converted according to the frequency; and
the controlling step further comprising controlling the optical power irradiated to record the information on the surface of the optical disc based on said calculated square root.

## Patentansprüche

1. Vorrichtung zur Aufzeichnung auf einer optischen Platte, die sich konstant unter einer gegebenen Drehrate, zum Aufzeichnen von Informationen, dreht, wobei die Vorrichtung aufweist:
einen Lineargeschwindigkeitsdetektor (3) zum Erfassen einer Lineargeschwindigkeit, die eine relative Geschwindigkeit eines Lichtflecks relativ zu einer Oberfläche der optischen Platte ist, auf die der Fleck gestrahlt wird, um die Informationen aufzuzeichnen,
wobei die Geschwindigkeit in einer umfangsmäßig tangentialen Richtung der optischen Platte gemessen wird; und
eine die optische Leistung steuernde Einheit (1) zum Steuern der optischen Leistung, die abgestrahlt wird, um Informationen auf der Oberfläche der optischen Platte basierend auf der Lineargeschwindigkeit, erfasst durch den Lineargeschwindigkeitsdetektor, aufzuzeichnen;
wobei der Lineargeschwindigkeitsdetektor (3) aufweist:
einen Platten-Takt-Detektor (7) zum Erfassen eines konstanten Platten-Takts unter den Spuren, gebildet auf der Oberfläche der optischen Platte; und
einen Frequenz-Spannungs-Wandler (8) zum Umwandeln der Frequenz des Platten-Takt-Signals, ausgegeben von dem Platten-Takt-Detektor (7), in eine Spannung entsprechend der Frequenz;
**dadurch gekennzeichnet, dass**
der Lineargeschwindigkeitsdetektor (3) eine Quadratwurzel-Berechnungseinrichtung (12) zum Berechnen einer Quadratwurzel (12) der Spannung, umgewandelt von dem Frequenz-Spannungs-Wandler (8), aufweist; und
die die optische Leistung steuernde Einheit (1) die optische Leistung, abgestrahlt, um die Informationen auf der Oberfläche der optischen Platte, basierend auf der Quadratwurzel, berechnet durch die Quadratwurzel-Berechnungseinrichtung (12), aufzuzeichnen, steuert.

2. Verfahren zur Aufzeichnung auf einer optischen Platte, die sich konstant unter einer gegebenen Drehrate, zum Aufzeichnen von Informationen, dreht, wobei das Verfahren die Schritte aufweist:
Erfassen einer Lineargeschwindigkeit, die eine relative Geschwindigkeit eines Lichtflecks relativ zu einer Oberfläche der optischen Platte ist, auf die der Fleck gestrahlt wird, um die Informationen aufzuzeichnen, wobei die Geschwindigkeit in einer umfangsmäßig tangentialen Richtung der optischen Platte gemessen wird; und
Steuern der optischen Leistung, abgestrahlt, um die Informationen auf der Oberfläche der optischen Platte aufzuzeichnen, basierend auf der Lineargeschwindigkeit, erfasst von dem Erfassungsschritt;
wobei der Erfassungsschritt weiterhin aufweist:
Erfassen eines konstanten Platten-Takts unter den Spuren, gebildet auf der Oberfläche der optischen Platte; und
Umwandeln der Frequenz des Platten-Takt-Signals in eine Spannung entsprechend der Frequenz;
**gekennzeichnet durch**
den Erfassungsschritt, der weiterhin ein Berechnen einer Quadratwurzel der Spannung, umgewandelt entsprechend zu der Frequenz, aufweist; und
den Steuerschritt, der weiterhin ein Steuern der optischen Leistung, abgestrahlt, um die Informationen auf der Oberfläche der optischen Platte, basierend auf der berechneten Quadratwurzel, aufzuzeichnen, aufweist.

## Revendications

1. Dispositif pour enregistrer sur un disque optique qui est entraîné en rotation de façon constante à une vitesse de rotation donnée pour enregistrer des informations, le dispositif comprenant:
un détecteur de vitesse linéaire (3) pour détecter une vitesse linéaire qui est une vitesse relative d'un point lumineux par rapport à une surface du disque optique sur laquelle est projeté le point lumineux pour enregistrer les informations, ladite vitesse étant mesurée dans une direction circonférentiellement tangentielle du disque optique; et
un contrôleur de puissance optique (1) servant à réguler la puissance optique irradiée pour enregistrer des informations sur la surface du disque optique sur la base de la vitesse linéaire détectée par le détecteur de vitesse linéaire;
le détecteur de vitesse linéaire (3) comprenant:
un détecteur de signal d'horloge de disque (7) servant à détecter un signal d'horloge de disque constant parmi les pistes formées sur la surface du disque optique; et
un convertisseur fréquence - tension (8) servant à convertir la fréquence du signal d'horloge de disque délivré en sortie par le détecteur de signal d'horloge (7) en une tension en fonction de la fréquence;
**caractérisé en ce que**:
le détecteur de vitesse linéaire (3) comprend un calculateur de racine carrée (12) servant à calculer une racine carrée (12) de la tension convertie en provenance du convertisseur fréquence - tension (8); et
le contrôleur de puissance optique (1) régule la puissance optique irradiée pour enregistrer les informations sur la surface du disque optique sur la base de la racine carrée calculée par le calculateur de racine carrée (12).

2. Procédé pour enregistrer sur un disque optique qui est entraîné en rotation de façon constante à une vitesse de rotation donnée pour enregistrer des informations, le procédé comprenant les étapes consistant à:
détecter une vitesse linéaire qui est une vitesse relative d'un point lumineux par rapport à une surface du disque optique sur laquelle est projeté le point lumineux pour enregistrer les informations, ladite vitesse étant mesurée dans une direction circonférentiellement tangentielle du disque optique; et
réguler la puissance optique irradiée pour enregistrer des informations sur la surface du disque optique sur la base de la vitesse linéaire détectée à l'étape de détection;
l'étape de détection consistant, en outre, à:
détecter un signal d'horloge de disque constant parmi les pistes formées sur la surface du disque optique; et
convertir la fréquence du signal d'horloge de disque en une tension en fonction de la fréquence;
**caractérisé en ce que**:
l'étape de détection consiste en outre à calculer une racine carrée de la tension convertie en fonction de la fréquence; et
l'étape de régulation consiste, en outre, à réguler la puissance optique irradiée pour enregistrer les informations sur la surface du disque optique sur la base de ladite racine carrée calculée.
